# EUROPÄISCHE PATENTSCHRIFT

(11) **EP 4 094 008 B1**
(45) Veröffentlichungstag und Bekanntmachung des Hinweises auf die Patenterteilung: **20.11.2024**
(21) Anmeldenummer: 20839323.1
(22) Anmeldetag: 23.12.2020
(51) Int. Cl.: F17C 5/06

(54) **VERFAHREN ZUM BETANKEN EINES WASSERSTOFFTANKS EINES KRAFTFAHRZEUGES MIT EINEM BRENNSTOFFZELLENANTRIEB UND KRAFTFAHRZEUG**
METHOD FOR FILLING A HYDROGEN TANK OF A MOTOR VEHICLE COMPRISING A FUEL CELL DRIVE, AND MOTOR VEHICLE
PROCÉDÉ DE REMPLISSAGE D'UN RÉSERVOIR D'HYDROGÈNE D'UN VÉHICULE AUTOMOBILE COMPRENANT UN ENTRAÎNEMENT PAR PILE À COMBUSTIBLE ET VÉHICULE AUTOMOBILE

(30) Priorität: 22.01.2020 DE 102020200691
(43) Veröffentlichungstag der Anmeldung: 30.11.2022
(73) Patentinhaber: Robert Bosch GmbH, 70442 Stuttgart (DE)
(72) Erfinder: KEMMER, Helerson, 71665 Vaihingen (DE)
(86) Internationale Anmeldenummer: PCT/EP2020/087782
(87) Internationale Veröffentlichungsnummer: WO 2021/148221

(56) Entgegenhaltungen:
- WO-A1-2017/158762
- DE-A1- 102016 217 341
- JP-A- 2013 200 020
- US-A1- 2018 094 772
- US-A1- 2018 259 127

## Beschreibung

### Stand der Technik

Die Füllmenge eines Wasserstofftanks hängt von dem zulässigen maximalen Tankdruck in dem Wasserstofftank ab. Der Tankdruck ist wiederum von der Temperatur des Wasserstoffes in dem Wasserstofftank abhängig. So steigt der Tankdruck bei einer Erhöhung der Umgebungstemperatur.

Folglich wird ein Kraftfahrzeug mit Wasserstofftank üblicherweise nicht mit einer wünschenswert hohen Füllmenge, beispielsweise der für die aktuelle Umgebungstemperatur maximalen Füllmenge betankt, da der Tankdruck bei einer Erhöhung der Temperatur des Wasserstoffes, etwa in Folge einer Erhöhung der Umgebungstemperatur, den zulässigen maximalen Tankdruck übersteigen würde.

Dementsprechend ist es bekannt, den Wasserstofftank nur soweit zu füllen, dass ein Tankdruck selbst bei sehr hohen Umgebungstemperaturen unterhalb des zulässigen maximalen Tankdruckes bleibt.

JP 2013 200 020 A beschreibt ein Gasspeicherbefüllungssystem mit einem Fahrzeug und einem Gasspeicher.

US 2018/094772 A1 beschreibt mehrere Vorrichtungen für Brennstofftransport sowie Brennstoffleitungen. Weiterhin betrifft es Verfahren für den Transport des Brennstoffs.

US 2018/259127 A1 beschreibt Gassysteme und Verfahren zur Verteilung des Gases in Richtung von Fahrzeugen oder Gasspeichern.

WO 2017/158762 A1 beschreibt ein Wasserstoffsystem mit einer Wasserstoff-Tankstellenvorrichtung, um Brennstoffzellenfahrzeuge mit Wasserstoff zu versorgen.

DE 10 2016 217 341 A1 beschreibt ein Verfahren zum Feststellen der erneuten Startfähigkeit eines Fahrzeugs, insbesondere beim Parken des Fahrzeugs. Das Fahrzeug umfasst einen Druckbehälter zum Speichern eines Brennstoffs.

### Offenbarung der Erfindung

Die Erfindung betrifft gemäß einem ersten Aspekt ein Verfahren zum Betanken eines Wasserstofftanks eines Kraftfahrzeuges mit einem Brennstoffzellenantrieb, wobei das Verfahren die Schritte aufweist: (a) Bestimmen eines ersten Betriebszeitpunktes, zu dem das Kraftfahrzeug in Betrieb genommen werden wird, und eines ersten Betriebsortes, an dem das Kraftfahrzeug in Betrieb genommen werden wird, (b) Ermitteln einer prognostizierten maximalen Umgebungstemperatur zum ersten Betriebszeitpunkt am ersten Betriebsort, und (c) Betanken des Wasserstofftanks mit Wasserstoff bis ein Tankdruck im Wasserstofftank einen zulässigen maximalen Tankdruck bei einer Tanktemperatur erreicht, wobei für die Tanktemperatur gilt: Tanktemperatur = [maximale Umgebungstemperatur; maximale Umgebungstemperatur + 10 K].

Insbesondere kann für die Tanktemperatur gelten: Tanktemperatur = [maximale Umgebungstemperatur; maximale Umgebungstemperatur + 5 K] oder Tanktemperatur = [maximale Umgebungstemperatur; maximale Umgebungstemperatur + 2 K]. Mit anderen Worten wird der Wasserstofftank nur soweit getankt, dass die Tanktemperatur zumindest der maximalen Umgebungstemperatur entspricht und höchstens der maximalen Umgebungstemperatur plus 10 K, insbesondere plus 5 K und ferner insbesondere plus 2 K.

Demgemäß ist es mit dem erfindungsgemäßen Verfahren möglich, die Füllmenge des Wasserstofftanks beim Tanken vor einer später geplanten Inbetriebnahme des Kraftfahrzeuges zu maximieren. Mittels des erfindungsgemäßen Verfahrens wird der Wasserstofftank dadurch unter Berücksichtigung der Gegebenheiten bei der späteren Inbetriebnahme maximal befüllt. Dadurch wird die Reichweite erhöht und die Anzahl an erforderlichen Tankvorgängen reduziert.

Beispielsweise kann das Kraftfahrzeug am Abend oder in der Nacht gemäß dem erfindungsgemäßen Verfahren betankt werden, wobei der erste Betriebszeitpunkt am Morgen des Folgetages liegt. Entsprechend sind die Temperaturen in der Nacht geringer und der Wasserstofftank darf nicht maximal befüllt werden, da ansonsten am Morgen des Folgetages, an dem die Temperatur höher als in der Nacht ist, der Tankdruck den maximal zulässigen Tankdruck übersteigen würde.

Mittels der prognostizierten maximalen Umgebungstemperatur muss aber nicht ein unwahrscheinlicher und viel zu hoher Sicherheitsfaktor, also eine zu hohe mögliche Umgebungstemperatur, berücksichtigt werden, um eine Überschreitung des Tankdruckes über den maximal zulässigen Tankdruck zu vermeiden. Vielmehr genügt es, die Umgebungstemperatur an dem ersten Betriebsort, also dem Einsatzort, und zum ersten Betriebszeitpunkt, also zum Einsatzzeitpunkt, zu prognostizieren. Dabei kann der Sicherheitsfaktor 10 K, insbesondere 5 K oder 2 K, über der prognostizierten maximalen Umgebungstemperatur liegen.

Die prognostizierte maximale Umgebungstemperatur kann beispielsweise mittels bekannten Wetterdaten oder Wettervorhersagen bereitgestellt werden. Die Wetterdaten oder Wettervorhersagen können beispielsweise über das Internet bezogen werden. Alternativ oder zusätzlich können am Kraftfahrzeug an den Vortagen zu dieser Zeit und an dem Ort gemessene Umgebungstemperaturen herangezogen werden.

Der erste Betriebszeitpunkt und der erste Betriebsort können beispielsweise manuell von dem Fahrzeugnutzer vorgegeben werden. Dies kann mittels Eingabe an dem Kraftfahrzeug erfolgen. Alternativ oder zusätzlich kann dies mittels einer Schnittstelle des Kraftfahrzeuges mit einem externen Gerät, etwa einem Smartphone, des Fahrzeugnutzers erfolgen. Das Smartphone kann einen Kalender aufweisen, der vom Kraftfahrzeug ausgelesen werden kann. Entsprechend kann das Kraftfahrzeug dazu eingerichtet sein, den ersten Betriebszeitpunkt und den ersten Betriebsort automatisch anhand von Daten des externen Gerätes, etwa dem Kalender des Smartphones, bereitzustellen. Der erste Betriebsort kann dabei auch mittels GPS-Daten ermittelt werden. Zusätzlich oder alternativ können der erste Betriebszeitpunkt und der erste Betriebsort vom Kraftfahrzeug fest vorgegeben sein. Weiterhin kann vorgesehen sein, dass der erste Betriebszeitpunkt und der erste Betriebsort vom Kraftfahrzeug anhand eines Nutzungsprofiles des Kraftfahrzeuges ermittelt wird. Mit anderen Worten kann ein Lernalgorithmus vorgesehen werden, mittels dessen das Kraftfahrzeug die Betriebszeitpunkt und Betriebsorte des Fahrzeugnutzers lernt und ermittelt.

Der zulässige maximale Tankdruck ist abhängig von dem Wasserstofftank. Der zulässige maximale Tankdruck kann beispielsweise 875 bar betragen.

Erfindungsgemäß weist das Verfahren ferner den Schritt auf: Druckentlastung des Wasserstofftanks, falls bestimmt wird, dass der Tankdruck den zulässigen maximalen Tankdruck übersteigen wird. Damit wird eine Lösung dafür bereitgestellt, dass ein Szenario eintritt, bei dem der Tankdruck wider Erwarten den zulässigen maximalen Tankdruck übersteigen wird. So kann eine Beschädigung des Wasserstofftankes vermieden werden.

Ein solches Szenario kann beispielsweise sein, dass das Wetter und damit die tatsächliche Umgebungstemperatur zum oder vor dem ersten Betriebszeitpunkt und/oder an dem ersten Betriebsort sich entgegen der Prognose verändern. Ein anderes beispielhaftes Szenario kann sein, dass der voraussichtliche Betriebszeitpunkt sich verschiebt oder das Kraftfahrzeug nicht in Betrieb genommen wird. Dann kann die Umgebungstemperatur über die prognostizierte maximale Umgebungstemperatur steigen und ebenfalls für einen Anstieg des Tankdruckes über den zulässigen maximalen Tankdruck sorgen.

Erfindungsgemäß wird ermittelt, ob die Umgebungstemperatur die Tanktemperatur vor Inbetriebnahme des Kraftfahrzeuges übersteigen wird, um zu bestimmen, ob der Tankdruck den zulässigen maximalen Tankdruck übersteigen wird. Alternativ oder zusätzlich ist es möglich, den Tankdruck aktiv zu überwachen, um zu bestimmen, ob dieser voraussichtlich überschritten werden wird. Beispielsweise kann eine derartige Bestimmung dadurch erfolgen, dass eine Grenze eines vorbestimmten Tankdruckes überschritten wird, die knapp unterhalb des zulässigen maximalen Tankdruckes liegt. Beide Bestimmungen ermöglichen es, dass dabei auf eventuelle Änderungen, beispielsweise des Wetters, oder einer Überschreitung des ersten Betriebszeitpunktes ohne Inbetriebnahme des Kraftfahrzeuges, reagiert werden kann.

Dabei ist es möglich, dass die Druckentlastung dadurch erfolgt, dass der Brennstoffzellenantrieb des Kraftfahrzeuges in Betrieb genommen wird, ohne dass das Kraftfahrzeug bewegt wird. So kann beispielsweise das Kraftfahrzeug für einen späteren Betrieb klimatisiert werden. Alternativ oder zusätzlich kann zumindest eine Sitzheizung betrieben werden, Frontscheiben und/oder Seitenspiegel entfrostet werden und/oder Softwareupdates aufgespielt werden. Insoweit wird das Betreiben des Brennstoffzellenantriebes mit Wasserstoff aus dem Wasserstofftank von dem Betreiben des Kraftfahrzeuges bzw. der Inbetriebnahme des Kraftfahrzeuges umfasst. Damit kann der entgegen der Prognose zu viel getankte Wasserstoff effizient genutzt werden, ohne dass der zulässige maximale Tankdruck überstiegen wird.

Bevorzugt ist, dass die Tanktemperatur der prognostizierten maximalen Umgebungstemperatur oder im Wesentlichen der prognostizierten maximalen Umgebungstemperatur entspricht. Dass die Tanktemperatur im Wesentlichen der prognostizierten maximalen Umgebungstemperatur entspricht schließt technisch bedingte und/oder geringfügige Abweichungen bis zu 1 K mit ein. Dadurch kann der Wasserstofftank unter Berücksichtigung der prognostizierten maximalen Umgebungstemperatur maximal befüllt werden. Somit wird die Reichweite des Kraftfahrzeuges mit dem Brennstoffzellenantrieb maximiert.

Insbesondere ist dabei bevorzugt, dass die Druckentlastung dadurch erfolgt, dass der Brennstoffzellenantrieb in Betrieb genommen wird, um eine Batterie des Kraftfahrzeuges zu laden. Entsprechend kann der zu viel getankte Wasserstoff zur Reduzierung des Tankdruckes auf einfache und günstige Weise zum Laden der Batterie des Kraftfahrzeuges genutzt werden.

Alternativ oder zusätzlich ist bevorzugt, dass die Druckentlastung dadurch erfolgt, dass Wasserstoff aus dem Wasserstofftank entlassen wird. Dazu kann ein Purgeventil des Wasserstofftankes genutzt werden. Der entlassene Wasserstoff kann mit einem Luftmassenstrom verdünnt werden. Diese Variante der Druckentlastung ist besonders einfach und bedarf daher keiner aufwendigen Steuerung und Programmierung.

Weiter alternativ oder zusätzlich ist bevorzugt, dass das Kraftfahrzeug ein autonom fahrendes Kraftfahrzeug ist und die Druckentlastung dadurch erfolgt, dass das Kraftfahrzeug autonom gefahren wird. Es kann sich bei diesen Fahrten um Leerfahrten und/oder Fahrdienstfahrten handeln. Bei Leerfahrten fährt das Kraftfahrzeug ohne Passagier. Bei Fahrdienstfahrten werden mit dem Kraftfahrzeug Passagiere gegen ein Entgelt transportiert. Dazu kann das Kraftfahrzeug eine Schnittstelle zur Kopplung mit einer Fahrtdienstapplikation, die etwa auf einem Smartphone installiert werden kann, aufweisen. Die Fahrdienstapplikation kann sich beispielsweise auf einem Smartphone des Passagiers befinden, der mittels der Fahrtdienstapplikation das Kraftfahrzeug mit dem ansonsten zu hohen Tankdruck für einen Fahrdienst anfragt. Dementsprechend ist eine wirtschaftliche Nutzung des zu viel getankten Wasserstoffes möglich.

Insbesondere kann, wenn das Kraftfahrzeug ein autonom fahrendes Kraftfahrzeug ist, das Betanken des Wasserstofftanks autonom erfolgen. In diesem Falle erfolgt das Betanken vollautomatisch. Der Fahrzeugnutzer des autonom fahrenden Kraftfahrzeuges muss dann beispielsweise nur noch angeben, wann er von seinem zuhause losfahren möchte, damit das Kraftfahrzeug automatisch den Wasserstofftank maximal befüllt.

Ferner ist bevorzugt, dass ein voraussichtlicher zweiter Betriebszeitpunkt, zu dem das Kraftfahrzeug im Anschluss an den ersten Betriebszeitpunkt in Betrieb genommen wird, bestimmt wird, wobei die prognostizierte maximale Umgebungstemperatur zum zweiten Betriebszeitpunkt, beispielsweise am ersten Betriebsort, ermittelt wird. Bevorzugt kann dabei sein, dass ein voraussichtlicher zweiter Betriebszeitpunkt, zu dem das Kraftfahrzeug im Anschluss an den ersten Betriebszeitpunkt in Betrieb genommen wird, und gegebenenfalls ein voraussichtlichen zweiter Betriebsort, an dem das Kraftfahrzeug zum zweiten Betriebszeitpunkt in Betrieb genommen wird, bestimmt werden, wobei die prognostizierte maximale Umgebungstemperatur zum zweiten Betriebszeitpunkt am zweiten Betriebsort ermittelt wird. Dies kann sinnvoll sein, falls bei der ersten Inbetriebnahme des Kraftfahrzeuges zum ersten Betriebszeitpunkt nur ein kurzer Betrieb geplant ist oder erfolgt, bei dem nur eine geringe Menge an Wasserstoff aus dem Wasserstofftank verbraucht wird und der zweite Betriebszeitpunkt deutlich später liegt, sodass zu diesem zweiten Betriebszeitpunkt die Temperatur des Wasserstoffes höher sein kann, sodass der Tankdruck den maximal zulässigen Tankdruck überschreiten könnte. Hierfür kann vorgesehen sein, dass eine Bestimmung erfolgt, wie viel Wasserstoff das Kraftfahrzeug bei dem ersten Betrieb zum ersten Betriebszeitpunkt verbrauchen wird.

Schließlich ist auch bevorzugt, dass das Betanken des Wasserstofftanks mit Wasserstoff in zwei sich gegenseitig abwechselnden Intervallen erfolgt, wobei in einem ersten Intervall Wasserstoff in den Wasserstofftank strömt bis eine zulässige Maximaltemperatur des Wasserstoffes in dem Wasserstofftank erreicht wird und in einem zweiten Intervall kein Wasserstoff in den Wasserstofftank strömt, sodass sich der Wasserstoff in dem Wasserstofftank mit der zulässigen Maximaltemperatur abkühlen kann. Die zulässige Maximaltemperatur kann beispielsweise im Bereich von 80 bis 90 °C, insbesondere bei 85 °C, liegen.

Folglich wechseln sich das erste Intervall und das zweite Intervall ab. Dadurch kann vermieden werden, dass die zulässige Maximaltemperatur überschritten wird. Das zweite Intervall kann durch aktives Kühlen des Wasserstoffes in dem Wasserstofftank beschleunigt werden. Der Wasserstoff kann alternativ und/oder zusätzlich vorgekühlt werden, beispielsweise auf einen Bereich von -20°C bis -50°C, insbesondere auf -40°C, vorgekühlt werden, bevor es in den Wasserstofftank strömt. Bei entsprechender Vorkühlung kann ein intervallartiges Betanken ggf. entfallen.

Die Erfindung betrifft gemäß einem zweiten Aspekt ein Kraftfahrzeug mit einem Wasserstofftank, einem Brennstoffzellenantrieb und einem Steuersystem zur Steuerung eines Betankens des Wasserstofftankes, wobei das Steuersystem zum Durchführen eines Verfahrens nach dem ersten Aspekt der Erfindung eingerichtet ist.

Anhand der beigefügten Zeichnung wird die Erfindung nachfolgend näher erläutert. Sämtliche aus den Ansprüchen, der Beschreibung oder der Figur hervorgehenden Merkmale, einschließlich konstruktiver Einzelheiten, können sowohl für sich als auch in den beliebigen verschiedenen Kombinationen erfindungswesentlich sein. Es zeigen jeweils schematisch:
- Figur 1: eine perspektivische Seitenansicht auf ein Ausführungsbeispiel eines erfindungsgemäßen Kraftfahrzeuges beim Betanken, und
- Figur 2: eine graphische Darstellung eines erfindungsgemäßen Verfahrens zum Betanken des Kraftfahrzeuges aus Figur 1.

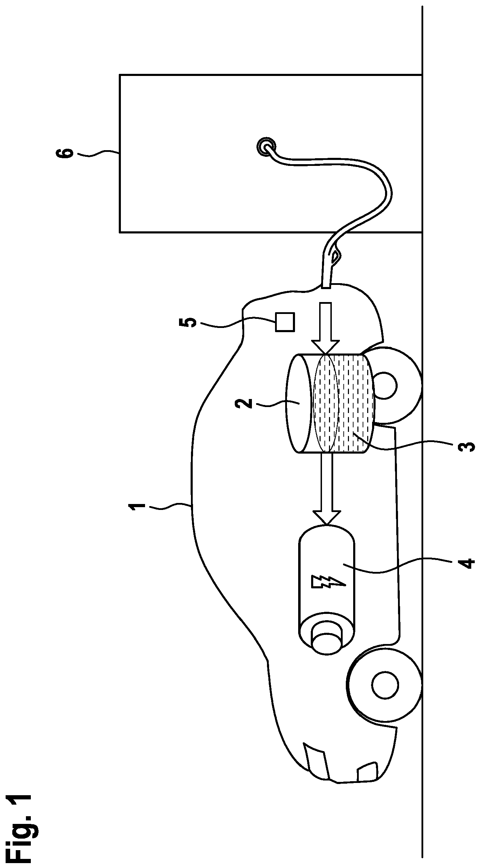

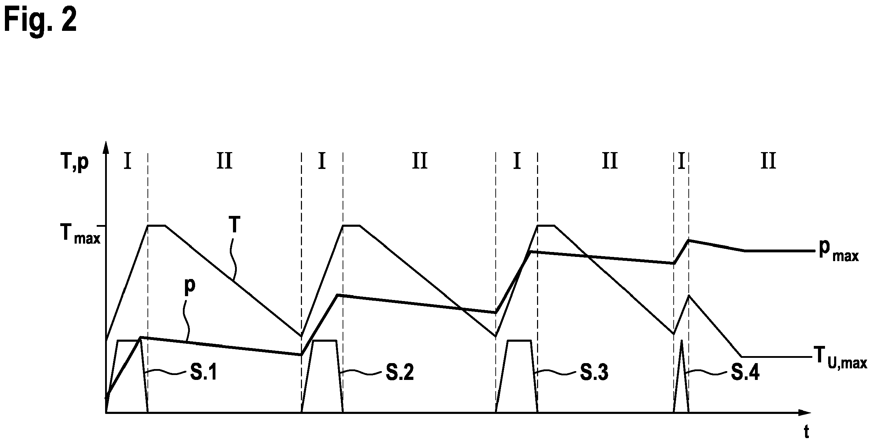

Elemente mit gleicher Funktion und Wirkungsweise sind in den Figuren 1 und 2 jeweils mit denselben Bezugszeichen versehen.

Figur 1 zeigt eine perspektivische Seitenansicht auf ein Ausführungsbeispiel eines erfindungsgemäßen Kraftfahrzeuges 1 mit einem nicht gezeigten Brennstoffzellenantrieb beim Betanken an einer Wasserstoffzapfsäule 6.

Die Wasserstoffzapfsäule 6 ist mittels einer Leitung und Zapfpistole an dem Kraftfahrzeug 1 angeschlossen. Ein Wasserstofftank 2 des Kraftfahrzeuges 1 wird mit Wasserstoff 3 aus der Wasserstoffzapfsäule 6 befüllt.

Das Kraftfahrzeug 1 verfügt ferner über eine Batterie 4 und ein Steuersystem 5. Die Batterie 5 kann mithilfe des Brennstoffzellenantriebes und dem Wasserstoff 3 aus dem Wasserstofftank 2 geladen werden. Das Steuersystem 5 dient dem Steuern des Betankungsvorganges.

Figur 2 zeigt eine graphische Darstellung eines erfindungsgemäßen Verfahrens zum Betanken des Kraftfahrzeuges 1 aus Figur 1.

Die graphische Darstellung repräsentiert einen Graphen, in dem eine Strömung S des Wasserstoffes 3 in den Wasserstofftank 2 bzw. ein Befüllen des Wasserstofftanks 2 mit Wasserstoff 3, die Temperatur T des Wasserstoffes 3 in dem Wasserstofftank 2 und der Tankdruck p des Wasserstoffes 3 in dem Wasserstofftank 2 gezeigt sind. Auf der Abszisse ist dabei die Zeit t des Betankungsvorganges abgetragen. Auf der Ordinate sind die Temperatur T und der Tankdruck p des Wasserstoffes abgetragen.

In einem ersten Intervall I wird Wasserstoff 3 mittels der Strömung S.1 dem Wasserstofftank 2 zugeführt. Dabei erhöhen sich der Tankdruck p und die Temperatur T des Wasserstoffes 3. Wenn oder bevor die Temperatur T eine zulässige Maximaltemperatur Tₘₐₓ erreicht, wird die Strömung S.1 unterbrochen und der Betankungsvorgang pausiert.

Im Anschluss folgt ein zweites Intervall II, in dem eine Zeit t abgewartet wird, bei der der Wasserstoff 3 abkühlt. Die Abkühlung kann aktiv unterstützt werden.

Im Anschluss an das zweite Intervall II folgt erneut ein weiteres erstes Intervall I, bei dem mittels der Strömung S.2 Wasserstoff 3 dem Wasserstofftank 2 zugeführt wird, bis die zulässige Maximaltemperatur Tₘₐₓ erreicht wird. Anschließend folgt wieder ein zweites Intervall II.

Dieser intervallartige Betankungsvorgang setzt sich solange fort, bis ein Tankdruck p erreicht wird, der einem zulässigen maximalen Tankdruck pₘₐₓ bei einer prognostizierten maximalen Umgebungstemperatur T_{U,max} entspricht. Die prognostizierte maximale Umgebungstemperatur T_{U,max} ist dabei eine Temperatur die bei einem voraussichtlichen ersten Betriebszeitpunkt und an einem voraussichtlichen ersten Betriebsort herrschen wird.

Ein beispielhaftes Anwendungsszenario wird im Folgenden näher erläutert. Die Umgebungstemperatur um 1 Uhr in der Nacht liegt bei T_{U} = 10 °C. Zu diesem Zeitpunkt soll das Kraftfahrzeug 1 betankt werden. Das Kraftfahrzeug 1 soll dann um 8 Uhr am Morgen des darauffolgenden Tages in Betrieb genommen werden.

Um zu bestimmen, wieviel Wasserstoff 3 in den Wasserstofftank 2 gefüllt werden kann, wird die maximale Umgebungstemperatur T_{U,max} anhand einer Wettervorhersage für den Ort der Inbetriebnahme des Kraftfahrzeuges 1 für 8 Uhr am Morgen prognostiziert. Diese beträgt vorliegend T_{U,max} = 20 °C. Dementsprechend kann der Wasserstofftank 2 solange mit Wasserstoff 3 befüllt werden, bis ein zulässiger maximaler Tankdruck pₘₐₓ von beispielsweise 875 bar und eine Tanktemperatur von 20 °C erreicht wird.

Wird nun das Fahrzeug entgegen der Planung nicht um 8 Uhr am Morgen in Betrieb genommen und wird bestimmt, dass die Umgebungstemperatur Tu über die prognostizierte maximale Umgebungstemperatur T_{U,max} = 20 °C steigen wird, würde dies zu einem Anstieg des Tankdruckes über den maximalen Tankdruck pₘₐₓ führen.

Um eine Überschreitung des maximalen Tankdruckes pₘₐₓ zu vermeiden, kann das Kraftfahrzeug 1 beispielsweise in Betrieb genommen werden, um die Batterie 4 zu laden, um autonom zu fahren oder aber aus dem Wasserstofftank 3 kann Wasserstoff 2 mittels eines Purgeventiles entlassen werden.

## Patentansprüche

1. Verfahren zum Betanken eines Wasserstofftanks (2) eines Kraftfahrzeuges (1) mit einem Brennstoffzellenantrieb, wobei das Verfahren die Schritte aufweist:
(a) Bestimmen eines ersten Betriebszeitpunktes, zu dem das Kraftfahrzeug (1) in Betrieb genommen werden soll, und eines ersten Betriebsortes, an dem das Kraftfahrzeug (1) in Betrieb genommen werden soll,
(b) Ermitteln einer prognostizierten maximalen Umgebungstemperatur (T_{U,max}) zum ersten Betriebszeitpunkt am ersten Betriebsort, und
(c) Betanken des Wasserstofftanks mit Wasserstoff (3) bis ein Tankdruck (p) im Wasserstofftank (2) einen zulässigen maximalen Tankdruck (pₘₐₓ) bei einer Tanktemperatur (T) erreicht, wobei für die Tanktemperatur (T) gilt: Tanktemperatur (T) = [maximale Umgebungstemperatur (T_{U,max}); maximale Umgebungstemperatur (T_{U,max}) + 10 K],
(d) Druckentlastung des Wasserstofftanks (2), falls bestimmt wird, dass der Tankdruck (p) den zulässigen maximalen Tankdruck (pₘₐₓ) übersteigen wird,
**gekennzeichnet durch** den Schritt:
(e) Ermitteln, ob die Umgebungstemperatur (T_{U}) die Tanktemperatur vor Inbetriebnahme des Kraftfahrzeuges übersteigen wird, um zu bestimmen, ob der Tankdruck (p) den zulässigen maximalen Tankdruck (pₘₐₓ) übersteigen wird.

2. Verfahren nach Anspruch 1,
**dadurch gekennzeichnet,**
**dass** die Tanktemperatur (T) der prognostizierten maximalen Umgebungstemperatur (T_{U,max}) oder im Wesentlichen der prognostizierten maximalen Umgebungstemperatur (T_{U,max}) entspricht.

3. Verfahren nach Anspruch 1,
**dadurch gekennzeichnet,**
**dass** die Druckentlastung dadurch erfolgt, dass der Brennstoffzellenantrieb in Betrieb genommen wird, um eine Batterie (4) des Kraftfahrzeuges (1) zu laden.

4. Verfahren nach Anspruch 1,
**dadurch gekennzeichnet,**
**dass** die Druckentlastung dadurch erfolgt, dass Wasserstoff (3) aus dem Wasserstofftank (2) entlassen wird.

5. Verfahren nach Anspruch 1,
**dadurch gekennzeichnet,**
**dass** das Kraftfahrzeug (1) ein autonom fahrendes Kraftfahrzeug (1) ist und die Druckentlastung dadurch erfolgt, dass das Kraftfahrzeug (1) autonom gefahren wird.

6. Verfahren nach einem der voranstehenden Ansprüche,
**dadurch gekennzeichnet,**
**dass** ein voraussichtlicher zweiter Betriebszeitpunkt, zu dem das Kraftfahrzeug (1) im Anschluss an den ersten Betriebszeitpunkt in Betrieb genommen wird, bestimmt wird, wobei die prognostizierte maximale Umgebungstemperatur (T_{U,max}) zum zweiten Betriebszeitpunkt ermittelt wird.

7. Verfahren nach einem der voranstehenden Ansprüche,
**dadurch gekennzeichnet,**
**dass** das Betanken des Wasserstofftanks (2) mit Wasserstoff (3) in zwei sich gegenseitig abwechselnden Intervallen erfolgt, wobei in einem ersten Intervall Wasserstoff (3) in den Wasserstofftank (2) strömt bis eine zulässige Maximaltemperatur (Tₘₐₓ) des Wasserstoffes (3) in dem Wasserstofftank (2) erreicht wird und in einem zweiten Intervall kein Wasserstoff (3) in den Wasserstofftank (2) strömt, sodass sich der Wasserstoff (3) in dem Wasserstofftank (2) mit der zulässigen Maximaltemperatur (Tₘₐₓ) abkühlen kann.

8. Kraftfahrzeug (1) mit einem Wasserstofftank (2), einem Brennstoffzellenantrieb und einem Steuersystem (5) zur Steuerung eines Betankens des Wasserstofftankes (2), **dadurch gekennzeichnet, dass** das Steuersystem (5) zum Durchführen eines Verfahrens nach einem der voranstehenden Ansprüche eingerichtet ist.

## Claims

1. Method for refuelling a hydrogen tank (2) of a motor vehicle (1) with fuel-cell drive, wherein the method comprises the following steps:
(a) determining a first operating time, at which the motor vehicle (1) is to be put into operation, and a first operating location, where the motor vehicle (1) is to be put into operation,
(b) ascertaining a predicted maximum ambient temperature (T_{U,max}) at the first operating time at the first operating location, and
(c) refuelling the hydrogen tank with hydrogen (3) until a tank pressure (p) in the hydrogen tank (2) reaches a permissible maximum tank pressure (pₘₐₓ) at a tank temperature (T), wherein it holds true for the tank temperature (T) that: tank temperature (T) = [maximum ambient temperature (T_{U,max}); maximum ambient temperature (T_{U,max}) + 10 K],
(d) relieving the pressure in the hydrogen tank (2), if it is determined that the tank pressure (p) will exceed the permissible maximum tank pressure (pₘₐₓ), **characterized by** the following step:
(e) ascertaining whether the ambient temperature (Tu) will exceed the tank temperature before the motor vehicle is started up, in order to determine whether the tank pressure (p) will exceed the permissible maximum tank pressure (pₘₐₓ).

2. Method according to Claim 1,
**characterized in that**
the tank temperature (T) corresponds to the predicted maximum ambient temperature (T_{U,max}) or substantially to the predicted maximum ambient temperature (T_{U,max}).

3. Method according to Claim 1,
**characterized in that**
the pressure is relieved by putting the fuel cell drive into operation in order to charge a battery (4) of the motor vehicle (1).

4. Method according to Claim 1,
**characterized in that**
the pressure is relieved by discharging hydrogen (3) from the hydrogen tank (2).

5. Method according to Claim 1,
**characterized in that**
the motor vehicle (1) is an autonomous motor vehicle (1) and the pressure is relieved by driving the motor vehicle (1) autonomously.

6. Method according to one of the preceding claims,
**characterized in that**
a probable second operating time, at which the motor vehicle (1) is put into operation after the first operating time, is determined, wherein the predicted maximum ambient temperature (T_{U,max}) at the second operating time is ascertained.

7. Method according to one of the preceding claims,
**characterized in that**
the hydrogen tank (2) is refuelled with hydrogen (3) in two mutually alternating intervals, wherein in a first interval, hydrogen (3) flows into the hydrogen tank (2) until a permissible maximum temperature (Tₘₐₓ) of the hydrogen (3) in the hydrogen tank (2) is reached and in a second interval, no hydrogen (3) flows into the hydrogen tank (2), with the result that the hydrogen (3) in the hydrogen tank (2) with the permissible maximum temperature (Tₘₐₓ) can cool down.

8. Motor vehicle (1) having a hydrogen tank (2),
fuel cell drive, and a control system (5) for controlling a refuelling of the hydrogen tank (2), **characterized in that** the control system (5) is configured to carry out a method according to one of the preceding claims.

## Revendications

1. Procédé permettant de remplir un réservoir d'hydrogène (2) d'un véhicule automobile (1) pourvu d'un entraînement par pile à combustible, le procédé présentant les étapes consistant à :
(a) déterminer un premier temps de fonctionnement auquel le véhicule automobile (1) doit être mis en service, et un premier lieu de fonctionnement où le véhicule automobile (1) doit être mis en service,
(b) établir une température ambiante maximale (T_{U,max}) prédite au premier temps de fonctionnement au premier lieu de fonctionnement, et
(c) remplir le réservoir d'hydrogène avec de l'hydrogène (3) jusqu'à ce qu'une pression de réservoir (p) dans le réservoir d'hydrogène (2) atteigne une pression de réservoir maximale (pₘₐₓ) admissible à une température de réservoir (T), la température de réservoir (T) étant : température de réservoir (T) = [température ambiante maximale (T_{U,max}) ; température ambiante maximale (Tu,max) + 10 K],
(d) décompresser le réservoir d'hydrogène (2) s'il est déterminé que la pression de réservoir (p) dépassera la pression de réservoir maximale (pₘₐₓ) admissible, **caractérisé par** l'étape consistant à :
(e) établir si la température ambiante (Tu) dépassera la température de réservoir avant la mise en service du véhicule automobile afin de déterminer si la pression de réservoir (p) dépassera la pression de réservoir maximale (pₘₐₓ) admissible.

2. Procédé selon la revendication 1,
**caractérisé**
**en ce que** la température de réservoir (T) correspond à la température ambiante maximale (T_{U,max}) prédite ou correspond substantiellement à la température ambiante maximale (T_{U,max}) prédite.

3. Procédé selon la revendication 1,
**caractérisé**
**en ce que** la décompression est effectuée **en ce que** l'entraînement par pile à combustible est mis en service pour charger une batterie (4) du véhicule automobile (1).

4. Procédé selon la revendication 1,
**caractérisé**
**en ce que** la décompression est effectuée **en ce que** l'hydrogène (3) est évacué du réservoir d'hydrogène (2).

5. Procédé selon la revendication 1,
**caractérisé**
**en ce que** le véhicule automobile (1) est un véhicule automobile (1) à conduite autonome, et la décompression est effectuée **en ce que** le véhicule automobile (1) est conduit de façon autonome.

6. Procédé selon l'une quelconque des revendications précédentes,
**caractérisé**
**en ce qu'**un deuxième temps de fonctionnement prévisionnel est déterminé auquel le véhicule automobile (1) sera mis en service après le premier temps de fonctionnement, dans lequel la température ambiante maximale (T_{U,max}) prédite est établie au deuxième temps de fonctionnement.

7. Procédé selon l'une quelconque des revendications précédentes,
**caractérisé**
**en ce que** le remplissage du réservoir d'hydrogène (2) avec de l'hydrogène (3) est effectué en deux intervalles mutuellement alternés, dans lequel, dans un premier intervalle, de l'hydrogène (3) s'écoule dans le réservoir d'hydrogène (2) jusqu'à ce qu'une température maximale (Tₘₐₓ) admissible de l'hydrogène (3) dans le réservoir d'hydrogène (2) soit atteinte, et dans un deuxième intervalle aucun hydrogène (3) ne s'écoule dans le réservoir d'hydrogène (2) de sorte que l'hydrogène (3) dans le réservoir d'hydrogène (2) peut refroidir à la température maximale (Tₘₐₓ) admissible.

8. Véhicule automobile (1), comprenant un réservoir d'hydrogène (2), un entraînement par pile à combustible et un système de commande (5) pour commander un remplissage du réservoir d'hydrogène (2), **caractérisé en ce que** le système de commande (5) est aménagé pour exécuter un procédé selon l'une quelconque des revendications précédentes.
